# Europäisches Patentamt

(19) **European Patent Office**

**Office européen des brevets**

(11) Numéro de publication: **0 270 452**
**B1**

(12) **FASCICULE DE BREVET EUROPEEN**

(45) Date de publication du fascicule du brevet:
**17.10.90**

(51) Int. Cl.⁵: **C03B 33/07**, B26D 7/01,
B26D 7/14

(21) Numéro de dépôt: **87402675.0**

(22) Date de dépôt: **26.11.87**

(54) **Dispositif de découpe de feuilles de matière plastique.**

(30) Priorité: **02.12.86 FR 8616791**

(43) Date de publication de la demande:
**08.06.88 Bulletin 88/23**

(45) Mention de la délivrance du brevet:
**17.10.90 Bulletin 90/42**

(84) Etats contractants désignés:
**AT BE CH DE ES FR GB IT LI LU NL SE**

(56) Documents cités:
**CH-A- 514 418**
**FR-A- 2 425 312**
**FR-A- 2 442 122**
**FR-A- 2 510 029**
**GB-A- 2 144 363**
**US-A- 1 954 061**
**US-A- 3 553 058**

**PATENT ABSTRACTS OF JAPAN,**
**vol. 8, no. 77 (C-218)[1514], 10 avril 1984; &**
**JP-A-59 3052 (CENTRAL GLASS K.K.) 09-01-1984**

(73) Titulaire: **SAINT-GOBAIN VITRAGE INTERNATIONAL,**
**18, avenue d'Alsace, F-92400 Courbevoie(FR)**

(72) Inventeur: **Floreancig, Eloi, Rue de Velaine 141 A,**
**B-5790 Jemeppe Sur Sambre(BE)**
Inventeur: **Legros, Désiré, Chemin de Velaine 19,**
**B-5790 Jemeppe Sur Sambre(BE)**
Inventeur: **Jandrain, Jean-Claude, Rue de Quinçay 13,**
**B-5198 Warnant Anhée(BE)**
Inventeur: **Simonon, Jean-Claude, Rue de la**
**Vacherie 104, B-5700 Auvelais(BE)**

(74) Mandataire: **Muller, René et al, SAINT-GOBAIN**
**RECHERCHE 39, quai Lucien Lefranc,**
**F-93304 Aubervilliers(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

**Description**

La présente invention est relative à la découpe de feuilles ou films formés d'une ou plusieurs couches de matière plastiques, notamment à la découpe de feuilles transparentes ou translucides, susceptibles d'être utilisées dans la fabrication des vitrages feuilletés. Plus particulièrement, l'invention est relative à un dispositif pour la découpe de ces feuilles, temporairement ou définitivement assemblées avec les autres éléments du vitrage, par un détourage.

Dans la fabrication de vitrages feuilletés, notamment de vitrages de sécurité formés de deux feuilles de verre et d'une feuille ou couche intercalaire en matière plastique, par exemple en polyvinylbutyral ou en polyuréthane, les éléments constitutifs du vitrage sont assemblés par empilement des éléments, suivi généralement d'un calandrage par passage de l'empilage entre des rouleaux presseurs, et d'un cycle d'autoclave.

Au moment de l'empilement des éléments, la feuille de matière plastique intercalaire se présente sous la forme d'un primitif généralement trapézoïdal dont le format est légèrement plus grand que celui du vitrage.

Après l'empilement, et avant le calandrage, les parties de la feuille intercalaire qui débordent du vitrage sont découpées manuellement par détourage à l'aide d'une lame métallique, l'ouvrier qui exécute cette découpe maintenant la lame appuyée contre le chant du vitrage. C'est une opération de main d'oeuvre longue et couteuse. En outre, elle se révèle quelquefois peu précise et il est alors nécessaire d'ébarber, généralement après le cycle d'autoclave, les parties de l'intercalaire qui débordent encore du vitrage. Un autre inconvénient de cette découpe manuelle est que l'outil risque d'attaquer par endroits les bords des feuilles de verre et de fragiliser ainsi le vitrage. En outre, la largeur de la chute ne peut être généralement inférieure à une valeur déterminée. Les opérations manuelles risquent aussi de provoquer des salissures ou des chutes de corps étrangers dans la partie interne de l'empilage d'où des rébuts et une moins bonne qualité. Enfin, les lames utilisées s'usent très rapidement, et il est indispensable d'en changer souvent.

Des dispositifs de découpe automatique ont déjà été par exemple dans la demande de brevet français 2 510 029 sur laquelle la partie pre-caractérisante de la revendication 1 est basée, ou encore dans la publication de brevet anglais 2 144 363 ou dans le document CH-B 514 418. Mais ces dispositifs ne sont pas entièrement satisfaisants.

Un des problèmes rencontrés dans la découpe automatique est la régulation de la température de l'outil de découpe. On s'est aperçu que pour obtenir une découpe propre et correcte d'une part et pour augmenter la longévité de l'outil d'autre part, l'outil de découpe devait avoir une température quasi constante durant toute l'opération de découpe. Les dispositifs automatiques cités ci-dessus ne fournissent pas une régulation de température suffisante.

Un autre problème rencontré dans la découpe automatique est celui de la souplesse de la feuille de matière plastique et surtout de son manque de tenue qui provoque un affaissement des parties qui débordent du vitrage et un mauvais maintien de ces parties face à l'attaque de l'outil de découpe.

L'invention propose un dispositif amélioré de découpe automatique par détourage qui obvie aux inconvénients cités et qui par sa régularité de découpe fait en sorte qu'il n'est généralement plus nécessaire de retoucher le bord de la feuille de matière plastique après l'assemblage définitif.

Le dispositif selon l'invention comprend une tête de découpe et des moyens permettant le déplacement relatif de la tête de découpe le long du bord du vitrage, et il se caractérise en ce que la tête de découpe est équipée d'un outil de découpe formé d'une lame portée par un corps de lame chauffé à une température déterminée et quasi constante, et en ce qu'il comprend des moyens qui maintiennent les parties à découper de la feuille de matière plastique dans une position sensiblement perpendiculaire au plan contenant l'arête tranchante de la lame, et au chant du vitrage.

Avantageusement, le corps de lame est chauffé par induction.

Selon une réalisation du dispositif selon l'invention, les moyens permettant le déplacement relatif de la tête de découpe est un robot industriel à 6 axes, le vitrage à détourer étant maintenu dans une position fixe alors que la tête de découpe animée par le bras du robot industriel se déplace le long du bord du vitrage.

Le dispositif selon l'invention peut être utilisé pour effectuer le détourage complet d'un vitrage. Il peut être avantageusement associé à un ou plusieurs autres dispositifs analogues, chacun d'eux opérant sur une partie adéquate du tour du vitrage.

Selon une réalisation du dispositif selon l'invention, les moyens qui maintiennent les parties à découper de la feuille de matière plastique sensiblement perpendiculaire à la lame sont formés d'une tige cylindrique disposée en avant de la lame de découpe dans le sens du déplacement de la lame.

Différents profils de lame peuvent convenir. Néanmoins, la forme préférée est une lame plate triangulaire qui présente deux arêtes de découpe, chacune correspondant à un des deux côtés du sommet inférieur du triangle. La pointe de la lame permet de percer la matière plastique dans la première phase de la découpe. Les deux arêtes de découpe autorisent la découpe dans les deux sens.

Lorsque le dispositif est programmé pour une découpe dans un sens puis dans l'autre, par exemple dans la première phase de la découpe comme décrit par la suite, avantageusement, il est prévu des moyens pour maintenir la partie à découper sensiblement perpendiculaire au plan contenant les arêtes tranchantes de la lame d'un côté de la lame et des moyens semblables de l'autre côté de la lame, ces moyens pouvant être également constitués chaque fois d'une tige cylindrique disposée d'un côté de la lame de découpe et de l'autre.

Outre la fonction qui est de faciliter l'attaque de l'outil de découpe dans la partie à découper, chacune des tiges cylindriques peut jouer un rôle dans l'évacuation de la partie découpée lorsque la découpe est effectuée en sens inverse.

A la tige cylindrique peut être jointe une plaque améliorant le maintien de la partie débordante de la matière plastique face à l'attaque de la lame surtout aux emplacements où cette partie est importante, c'est à dire généralement aux coins du vitrage.

Les moyens qui maintiennent les parties débordantes à découper de la feuille intercalaire sont avantageusement rétractables, de sorte que de nombreuses variations autour de l'utilisation ou non de ces moyens, en fonction du sens de découpe, sont autorisées.

La lame de découpe, chauffée par conduction à partir du corps de lame, est portée à une température comprise généralement entre 200 et 350°C à l'emplacement de la découpe, le corps de lame chauffé avantageusement par induction étant à une température de l'ordre de 750°C.

D'autres avantages et caractéristiques de l'invention apparaitront dans un exemple de réalisation du dispositif de découpe.

La figure 1 représente schématiquement une tête de découpe du dispositif selon l'invention en position de découpe pour le détourage d'un vitrage feuilleté.

La figure 2 représente une tête de découpe dans une vue en plan.

La figure 3 représente la tête de découpe de la figure 2, dans une vue de côté.

La figure 4 représente l'amorçage de la découpe pour le détourage d'un vitrage feuilleté.

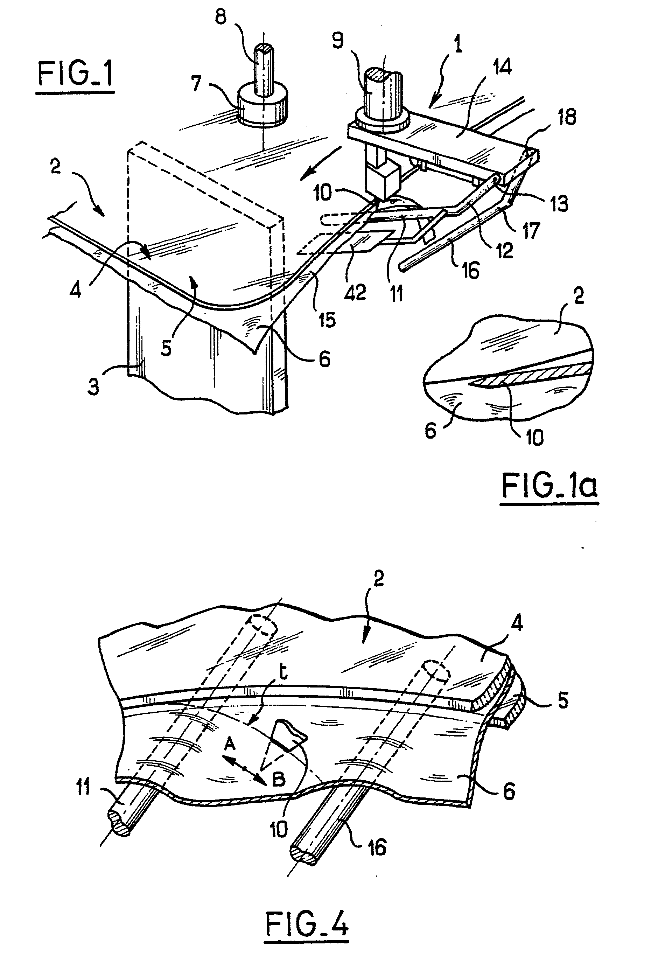

Sur la figure 1, la tête de découpe 1 est représentée en action lors du détourage d'un vitrage feuilleté 2 disposé au poste de découpe dans une position horizontale fixée au préalable, et soutenu par des supports 3.

Le vitrage, formé de deux feuilles de verre 4, 5, et d'une feuille intercalaire 6 constituée d'un primitif aux dimensions légèrement supérieures à celles des feuilles de verre, est maintenu au poste de détourage à l'aide d'un tampon cylindrique 7, monté au bout de la tige 8 d'un vérin vertical, qui est appliqué approximativement au centre du vitrage. Ce vitrage a été au préalable positionné dans l'espace suivant des références précises par un dispositif non représenté. La tête de découpe 1 est montée au bout du poignet 9 d'un robot industriel à 6 axes (non représenté sur la figure).

La découpe est réalisée par une lame triangulaire plate 10, chauffée par conduction à partir d'un porte-lame lui-même chauffé par induction. La lame 10 est appuyée au cours de la découpe contre le chant du vitrage par un vérin comme décrit par la suite. La lame 10 présente deux arêtes de découpe 43, 44 chacune correspondant à un des deux côtés du sommet inférieur du triange constitué par la lame. L'angle d'attaque de la lame est orienté comme représenté sur la figure 1a légèrement vers l'extérieur par rapport au vitrage afin de ne pas attaquer le bord des feuilles de verre.

En amont de la lame, une tige cylindrique 11 portée au bout d'un bras articulé 12, autour d'un axe 13 monté sur une plaque support 14, maintient la partie débordante à découper 15 de la feuille de matière plastique, dans une position sensiblement perpendiculaire au plan de la lame, donc au chant du vitrage afin de faciliter l'attaque de la lame pour la découpe. La tige cylindrique 11 est en appui contre la face de la feuille inférieure 5 du vitrage feuilleté. Une seconde tige cylindrique 16, portée au bout d'un bras articulé 17, autour d'un axe 18, de façon semblable à la première, est disposée en aval de la lame. Elle est représentée dans une position rétractée, c'est à dire dégagée par rapport au vitrage, ce qui est la position de repos.

Le robot est programmé pour faire parcourir à la tête de découpe 1, un peu plus de la moitié du tour du vitrage, l'autre moitié étant parcourue par une seconde tête de découpe, analogue à celle représentée, portée de même par le poignet d'un second robot industriel à 6 axes (non représenté). L'utilisation de 2 robots permet évidemment de réduire la durée du détourage, et par là d'améliorer le rendement de la ligne d'assemblage automatique dans laquelle peut s'intégrer le dispositif de découpe selon l'invention.

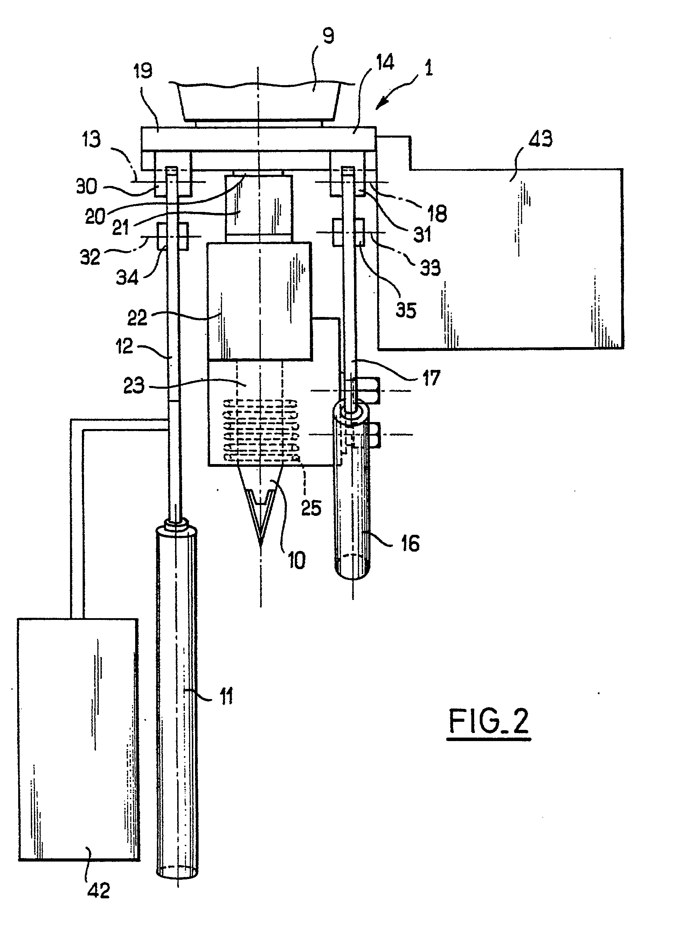

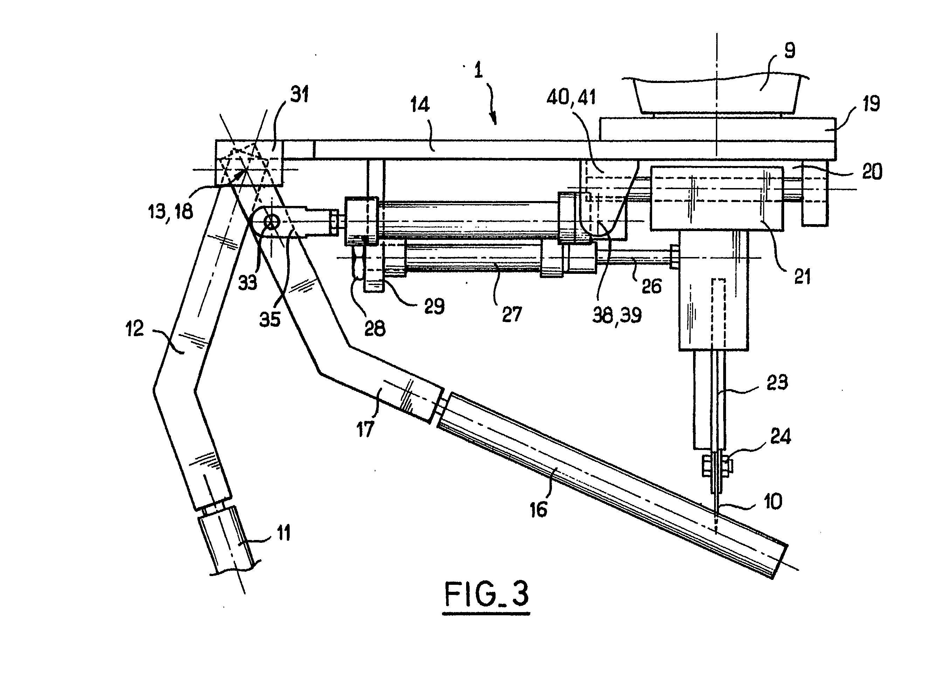

Sur les figures 2 et 3 est représentée plus en détail la tête de découpe 1 du dispositif de détourage automatique. Cette tête comprend la plaque-support 14 surmontée d'une plaque cylindrique 19 qui la rattache au poignet 9 du robot industriel. Sous la plaque support 14 est fixée une glissière 20 le long de laquelle glisse un palier 21, sous lequel est monté le support 22 du porte-lame 23. La lame triangulaire 10 est fixée au bout du porte lame 23 à l'aide d'un écrou 24. Autour du porte-lame 23 est monté l'élément de chauffage par induction 25 formé d'un tube de cuivre disposé en spirales, relié par des moyens non représentés à un circuit électrique contenu dans le boitier 43 ainsi qu'à un circuit de refroidissement.

Sur le côté du support du porte-lame 23 est fixé l'extrémité de la tige 26 d'un vérin 27 fixé à l'aide d'une vis 28 à une pièce 29 solidaire de la plaque support 14. Le vérin, dont l'action est parallèle à la glissière, est prévu lors de la découpe pour appuyer, avec une force déterminée et programmable le long de la trajectoire, la lame 10 contre le chant du vitrage par l'intermédiaire du support 22 du porte lame 23.

A l'extrémité arrière de la plaque support 14 par rapport à sa fixation sur le poignet du robot, de chaque côté de ladite plaque et montés solidairement sur elle, des paliers en U 30, 31, portent les axes 13, 18, autour desquels s'articulent les extrémités des deux bras courbées 12, 17. Chacun des deux bras porte à son bout une tige cylindrique 11, 16, qui en position de travail, comme représenté sur la figure 3 pour la tige 11, est disposée légèrement inclinée par rapport aux parties périphériques des faces des feuilles de verre, de sorte qu'elle soutient la partie à découper du primitif dans une position sensiblement perpendiculaire au chant du vitrage et à la lame de décou pe au point de découpe. Chaque tige est liée à l'aide d'un axe 32, 33 à l'extrémité de la tige 34, 35 d'un vérin 36, 37 dont le corps s'articule sur un autre axe 38, 39 porté par une oreille 40, 41 fixée à la plaque support 14.

Sur la tige 11 disposée en amont de la lame de découpe dans le sens principal de la découpe pour le détourage, est également montée une plaque supplémentaire 42 qui est prévue pour améliorer le maintien de la partie à découper de la feuille intercalaire 6, là où ses dimensions sont les plus importantes, en particulier aux coins du vitrage.

Le dispositif fonctionne de la manière suivante : un vitrage feuilleté 2 constitué de deux feuilles de verre et d'une feuille intercalaire en polyvinylbutyral sous la forme d'un primitif trapézoïdal est amené par un dispositif annexe, non représenté, au poste de découpe par détourage et positionné dans l'espace suivant des références précises. Il est alors immobilisé sur le support à l'aide du tampon cylindrique 7. Les deux robots à 6 axes sont programmés pour effectuer simultanément la découpe d'un plus de la moitié du vitrage. Chacune des deux têtes de découpe est amenée par le poignet de son robot dans la position d'amorçage qui est schématisée sur la figure 4. La lame de découpe pénètre dans la partie à découper de l'intercalaire sensiblement au centre de la bande à découper, après que les deux tiges cylindriques 11, 16 aient été actionnées par les vérins 36, 37 pour les amener à leur position de travail, c'est-à-dire de maintien de la partie émergeante à découper de la feuille intercalaire. La découpe s'effectue d'abord d'après la flèche A vers le bord du vitrage, selon une trajectoire courbe de la lame jusqu'à une position tangente sensiblement au bord, puis selon la flèche B par un recul de la lame suivant la même trajectoire d'abord, puis jusqu'au bord du primitif. Les trajectoires sont schématisées par des traits mixtes t. Puis la lame revient jusqu'au point de tangence selon la flèche A, et en étant appuyée constamment contre le chant du vitrage par l'action combinée du mouvement de poignet du robot et du vérin 27, elle suite alors le tour du vitrage. La tige cylindrique 11 disposée en amont, en appui contre le bord de la feuille de verre inférieure, soulève la partie à découper de l'intercalaire qui se présente alors à la lame dans une position sensiblement perpendiculaire au plan de la lame. La plaque 42 solidaire de la tige amont 11, disposée encore plus en amont et de quelques centimètres fournit un premier soutien à la bande à découper surtout aux emplacements des coins du vitrage, c'est-à-dire des coins du trapèze que constitue le primitif. La tige cylindrique arrière 16 peut le cas échéant être placée dans sa position de travail, appliquée contre la face inférieure du vitrage, où elle assure alors le rôle de guide pour la chute de la bande découpée 15. Lorsque chacune des deux têtes de découpe à parcouru un peu plus d'un demi-tour du vitrage, afin que l'une rejoigne le début de la découpe effectuée par l'autre, le détourage est terminé et les deux têtes sont dégagées du chant du vitrage par les bras des robots. Le vitrage est ensuite évacué vers le poste suivant.

Le dispositif selon l'invention présente encore l'avantage de pouvoir être utilisé pour des découpes de bandes très étroites, et aussi pour des bandes de largeur très variable sur un même tour de vitrage.

## Revendications

1. Dispositif pour la découpe automatique par détourage des parties (15) de la feuille intercalaire (6) qui débordent du vitrage (2) dans la fabrication des vitrages feuilletés, comprenant une tête de découpe (1) et des moyens (9) permettant le déplacement relatif de la tête de découpe le long du bord du vitrage, caractérisé en ce que la tête de découpe (1) est équipée d'une lame) portée par un corps de lame (23) chauffé à une température déterminée et quasi constante, et en ce qu'il comprend des moyens (11, 16) qui maintiennent les parties à découper de la feuille de matière plastique dans une position sensiblement perpendiculaire au plan contenant l'arête tranchante de la lame.

2. Dispositif selon la revendication 1, caractérisé en ce que le corps de lame (23) est chauffé par induction.

3. Dispositif selon une des revendications 1 ou 2, caractérisé en ce que les moyens permettant le déplacement relatif de la tête de découpe est un robot industriel à 6 axes.

4. Dispositif selon une des revendications 1 à 3, caractérisé en ce que les moyens (11, 16) qui maintiennent les parties à découper de la feuille de matière plastique sensiblement perpendiculaire à la lame sont formés d'une tige cylindrique (11, 16) disposée en avant de la lame, dans le sens du déplacement de la lame.

5. Dispositif selon la revendication 4, caractérisé en ce que la tige cylindrique (11, 16) prend appui contre la face inférieure du vitrage.

6. Dispositif selon une des revendications 4 ou 5, caractérisé en ce que la tige cylindrique (11, 16) est montée sur un bras articulé (12, 17) la rendant rétractable.

7. Dispositif selon une des revendications 1 à 6, caractérisé en ce que la lame (10) est plate, triangulaire, et qu'elle présente deux arêtes de découpe (43, 44) chacune correspondant à un des deux côtés du sommet inférieur du triangle.

8. Dispositif selon une des revendications 1 à 7, caractérisé en ce qu'il comprend des moyens qui maintiennent les parties à découper, des deux côtés de la lame.

9. Dispositif selon une des revendications 1 à 8, caractérisé en ce qu'il comprend un vérin (27) maintenant la lame appuyée contre le chant du vitrage.

10. Dispositif selon une des revendications 4 à 9, caractérisé en ce qu'il comprend une plaque (42) disposée en amont de la tige cylindrique (11), elle-même disposée en amont de la lame (10), qui améliore le maintien de la partie à découper de la feuille intercalaire (6).

## Claims

1. Apparatus for the automatic cutting, by routing, of the parts (15) of the intermediate sheet (6) which project beyond the pane (2) in the manufacture of laminated panes, comprising a cutting head (1) and means (9) making possible the relative displacement of the cutting head along the edge of the pane, characterized in that the cutting head (1) is equipped with a blade (10) carried by a blade body (23) heated to a determined and quasi-constant temperature, and in that the apparatus comprises means (11, 16) which keep the parts, to be cut off, of the sheet of plastics material in a position substantially perpendicular to the plane containing the cutting edge of the blade.

2. Apparatus according to Claim 1, characterized in that the blade body (23) is heated by induction.

3. Apparatus according to one of Claims 1 or 2, characterized in that the means making possible the relative displacement of the cutting head is an industrial robot having 6 axes.

4. Apparatus according to one of Claims 1 to 3, characterized in that the means (11, 16) which keep the parts of the sheet of plastics material to be cut off substantially perpendicular to the blade are formed of a cylindrical rod (11, 16) disposed in front of the blade, in the direction of movement of the blade.

5. Apparatus according to Claim 4, characterized in that the cylindrical rod (11, 16) bears against the lower face of the pane.

6. Apparatus according to one of Claims 4 or 5, characterized in that the cylindrical rod (11, 16) is mounted on an arm (12, 17) articulated to make it retractable.

7. Apparatus according to one of Claims 1 to 6, characterized in that the blade (10) is flat and triangular and that it has two cutting edges (43, 44), each corresponding to one of the two sides of the lower apex of the triangle.

8. Apparatus according to one of Claims 1 to 7, characterized in that it comprises means which hold the parts to be cut on either side of the blade.

9. Apparatus according to one of Claims 1 to 8, characterized in that it comprises a jack (27) which keeps the blade in bearing against the edge of the pane.

10. Apparatus according to one of Claims 4 to 9, characterized in that it comprises a plate (42) disposed upstream of the cylindrical rod (11), the latter being upstream of the blade (10), which improves the holding of the part of the intermediate sheet (6) to be cut off.

## Patentansprüche

1. Vorrichtung zum automatischen Schneiden durch Beschneiden der Teile (15) der Zwischenschicht (6), die bei der Herstellung von Verbundglasscheiben über die Scheibe (2) hinausragen, umfassend einen Schneidkopf (1) und Einrichtungen (9), die die Relativverschiebung des Schneidkopfes entlang des Randes der Scheibe ermöglichen, dadurch gekennzeichnet, daß der Schneidkopf ein Schneidmesser (10) aufweist, das von einem auf eine vorgegebene und im wesentlichen konstante Temperatur erhitzten Gehäuse (23) getragen wird, und daß er Einrichtungen (11, 16) aufweist, die die von der Kunststoffschicht abzuschneidenden Teile in einer Position halten, die im wesentlichen senkrecht zu der Ebene ist, in der die Schneidkante des Messers liegt.

2. Vorrichtung nach Anspruch 1, dadurch gekennzeichnet, daß das Gehäuse (23) durch Induktion erhitzt wird.

3. Vorrichtung nach Anspruch 1 oder 2, dadurch gekennzeichnet, daß die Einrichtung für die Relativverschiebung des Schneidkopfes ein Industrieroboter mit sechs Achsen ist.

4. Vorrichtung nach einem der Ansprüche 1 bis 3, dadurch gekennzeichnet, daß die Einrichtungen (11, 16), die die von der Kunststoffschicht abzuschneidenden Teile im wesentlichen senkrecht zum Schneidmesser halten, als eine zylindrische Stange (11, 16) ausgebildet sind, die in der Verschiebungsrichtung des Messers gesehen vor dem Messer angeordnet ist.

5. Vorrichtung nach Anspruch 4, dadurch gekennzeichnet, daß sich die zylindrische Stange (11, 16) an der Unterseite der Scheibe abstützt.

6. Vorrichtung nach Anspruch 4 oder 5, dadurch gekennzeichnet, daß die zylindrische Stange (11, 16) an einem Schwenkarm (12, 17) befestigt ist, der sie zurückziehbar macht.

7. Vorrichtung nach einem der Ansprüche 1 bis 6, dadurch gekennzeichnet, daß das Messer (10) flach und dreieckig ist und daß es zwei Schneidkanten (43, 44) aufweist, von denen jede einer der beiden Seiten der unteren Spitze des Dreiecks entspricht.

8. Vorrichtung nach einem der Ansprüche 1 bis 7, dadurch gekennzeichnet, daß sie Einrichtungen aufweist, die die abzuschneidenden Teile zu beiden Seiten des Messers hält.

9. Vorrichtung nach einem der Ansprüche 1 bis 8, dadurch gekennzeichnet, daß sie einen Zylinder (27) aufweist, der das Messer gegen die Schmalseite der Scheibe gedrückt hält.

10. Vorrichtung nach einem der Ansprüche 4 bis 9, dadurch gekennzeichnet, daß sie eine Platte (42) aufweist, die oberhalb der zylindrischen Stange (11) angeordnet ist, sie selbst oberhalb des Messers (10) angeordnet ist, so daß das Festhalten des abzuschneidenden Teils der Zwischenschicht (6) verbessert wird.

FIG.1

FIG.1a

FIG.4

FIG. 2

FIG_3